(19) Europäisches Patentamt
European Patent Office
Office européen des brevets

(11) Publication number: **0 308 090**
**A2**

(12) # EUROPEAN PATENT APPLICATION

(21) Application number: 88307816.4

(22) Date of filing: 24.08.88

(51) Int. Cl.⁴: **C08L 23/04 , C08L 77/00 ,**
**//(C08L23/04,77:00)**

(30) Priority: 31.08.87 US 91579

(43) Date of publication of application:
22.03.89 Bulletin 89/12

(84) Designated Contracting States:
BE DE FR GB IT NL

(71) Applicant: **MOBIL OIL CORPORATION**
**150 East 42nd Street**
**New York New York 10017(US)**

(72) Inventor: **Su, Tien-Kuei**
**7 Adams Drive**
**Belle Mead New Jersey 08502(US)**

(74) Representative: **Colmer, Stephen Gary**
**Patent Department c/o Mobil Services**
**Company Limited Mobil Court 3 Clements**
**Inn**
**London WC2A 2EB(GB)**

(54) **Blends and films of linear ethylene polymers with polyamide, and method of their extrusion.**

(57) Heat pressure and extruder torque in the extrusion of linear ethylene polymers as linear low density polyethylene (LLDPE) are reduced by adding a small amount (less than 3 weight percent) of a thermoplastic polyamide polymer. Films extruded from the blend exhibit better surface appearance by reduction of melt fracture.

EP 0 308 090 A2

# BLENDS AND FILMS OF LINEAR ETHYLENE POLYMERS WITH POLYAMIDE, AND METHOD OF THEIR EXTRUSION

## BACKGROUND OF THE INVENTION

It is well known that LLDPE (linear low density polyethylene) such as copolymers of ethylene and hexene generally produce films of superior properties over high pressure highly branched low density polyethylenes (LDPE). LLDPE films exhibit higher tensile strength, outstanding puncture resistance and enhanced impact strength. Similarly linear ethylene polymers such as high density polyethylene exhibit excellent properties for some purposes. However, the extrudability of linear ethylene polymers including LLDPE is poor mainly because of their high shear viscosity. Due to the absence of long chain branching in LLDPE its shear viscosity exhibits less shear thinning than branched LDPE. This non-Newtonian rheological behavior brings about extrusion difficulties by increasing extrusion head pressure resulting in high motor amperage and high torque which limits the output under a given set of extrusion conditions compared to that possible with prior art LDPE resins.

Furthermore, the extrusion problem is frequently accompanied by the appearance of surface irregularities on the produced film. Surface irregularities or more generally, "melt fracture" occur over a range of shear rate depending on the molecular characteristics of the polymer. These are characterized by closely spaced circumferential ridges along the extrudate when extruded through a capillary die. In a more severe form it resembles what is generally known as "sharkskin." The onset of melt fracture is believed to occur at or above a critical shear stress although the concept is yet to be fully understood.

In the past many attempts were made to alleviate the extrusion problems encountered with LLDPE. For example, blends of linear low density polyethylenes with LDPE (branched high pressure low density polyethylene) are known. The use of various kinds of processing aids such as low molecular weight hydrocarbons, fatty amides or bis-amides, fluorelastomers and certain silicon polymers is also known.

U.S. Patent 3,963,799 describes blends of polyethylene and polyamide containing a graft copolymer in which the polyamide is the major component. It refers to prior art U.S. Patents 3,093,255 and 3,626,026 which are said to teach blends in which the polyamide is present in amounts of as little as 5 weight percent.

U.S. Patent 4,377,616 discloses blending incompatible materials such as small amounts of nylon in polyolefin films as sites for opacity producing voids when the films are biaxially oriented. In a particular embodiment (Example 1) 7 weight percent nylon is added to polypropylene.

PCT Application WO 87/01990 discloses the addition of 1 to 4% polyamide as a high temperature slip agent for polyolefin films. However, no suggestion is made of adding polyamide to linear polyolefins, nor is polyamide suggested as an additive for modifying molten state properties of polyolefins such as extrudability characteristics.

A small amount, about 0.01 to 3.0, preferably 0.01 to less than 1 weight percent, of a thermoplastic polyamide polymer is added to a linear polyethylene as a processing aid resulting in reduced heat pressure and power consumption during extrusion into films permitting higher output rates. The polyamide also contributes to improved surface appearance of the films by reduction or elimination of melt fracture commonly encountered in the extrusion of linear ethylene polymers, and to reduced blocking in LLDPE blends.

The linear ethylene polymers whose extrusion behavior is improved in accordance with this invention are copolymers of ethylene and a higher olefin, particularly linear low density polyethylene LLDPE. The LLDPE generally contains up to about 10 weight percent of polymerized higher alpha olefin and has a density between about 0.9 to anout 0.94, preferably less than 0.930. The melt index (MI) is usually from about 0.4 to about 4 or more and preferably from about 0.6 to about 2. LLDPE copolymers of ethylene and hexene such as 1-hexene are particularly preferably.

The polyamide polymers are advantageously chosen from the class of polyamides known as nylons which are tough fiber forming polymers. Polycaprolactam and polyhexamethylene adipamide are particularly useful. The polyamide is generally added in the smallest amount needed to achieve its purpose, usually about 0.01 to 3 weight percent e.g., 0.01 to less than 1 weight percent, and preferably 0.1 to less than 1 weight percent.

As in other polyolefin compositions, stabilizers, antioxidants, plasticizers, pigments, fillers and similar additives can be incorporated into the blends of the present invention. The compositions of the present invention can be fabricated into film, fiber, sheeting, rod, tubing, pipe and a variety of molded objects, using methods generally employed in the fabrication of polyolefins. In particular, the compositions of the present invention are outstanding as film resins.

The blends of this invention can be prepared in any way known to those skilled in the art. Thus, a physical mixture of the polymers in powder or in pellet form can be blended into a uniform composition in a Banbury mixer or by milling the composition on calendar rolls using temperatures above the melting point of the higher melting component. In a preferred embodiment, a rough mixture of the polymers is put through a melt extruder containing a mixing extrusion screw of a mixing section on the extrusion screw. The resins may also be in the form of granules and may be blended as either granules or pellets of mixtures thereof. Other means of obtaining a homogeneous blend will be apparent to those skilled in the art.

The invention is illustrated by the following non-limiting examples in which all parts are by weight unless otherwise indicated.

## EXAMPLES 1 - 3

Several tests to evaluate the processability of blends and the quality of the extrudates were conducted using a 1.9cm (3/4 inch) Brabender extruder having a capillary die with a diameter of 0.16cm (0.062 inch). The surface texture of the extrudates was examined by using an optical microscope. The thin films were fabricated through a 2.5cm (1 inch) annular die.

The improvement of processability of Exxon 3001 (Control A) with 1% and 2.5% Nylon 6 is illustrated in Table I. For example, at 1% level of Nylon 6, it can save 27.9% of power consumption (rpm x torque) at 65 rpm or it can increase 37.6% of output rate at similar power consumption. Similarly, the significant improvement of extrudability of Mobil 0.5 MI (Control B) with 1% Nylon 6 is given in Table II.

A significant improvement of surface appearance is observed in extrudates of LLDPE (Exxon 3001) with 1% Nylon 6. LLDPE extrudates without polyamide show screw thread-like distortion while those with 1% Nylon are melt fracture free as observed with an optical microscope. Significant melt fracture elimination of Exxon 3001 with 2.5% Nylon 6 at low shear was also observed. However, the blends start showing groove-like distortion at high shear. At 1% level of Nylon 6, the elimination of surface distortion of the extrudates of Mobil 0.5 MI is apparent. The extrudates of the blends still are melt fracture free at even higher shear.

TABLE I

| Example | Wt. % Nylon | RPM | Pressure, kPa (PSI) | Torque, M-g | Output, g/Min. | Shear Rate Sec$^{-1}$ |
|---|---|---|---|---|---|---|
| Control A | 0 | 25 | 14262 2070 | 2210 | 8.9 | 65 |
| | 0 | 35 | 15847 2300 | 2670 | 13.0 | 95 |
| | 0 | 45 | 17914 2600 | 2980 | 16.3 | 115 |
| | 0 | 55 | 19843 2880 | 3310 | 19.7 | 150 |
| | 0 | 65 | 20946 3040 | 3620 | 24.5 | 180 |
| 1 | 1.0 | 25 | 13987 2030 | 1850 | 8.7 | 65 |
| | 1.0 | 35 | 15158 2200 | 1960 | 12.9 | 95 |
| | 1.0 | 45 | 15778 2290 | 2070 | 16.1 | 115 |
| | 1.0 | 55 | 17156 2490 | 2350 | 20.6 | 150 |
| | 1.0 | 65 | 18190 2640 | 2610 | 24.7 | 180 |
| | 1.0 | 80 | 20050 2910 | 3040 | 33.7 | 250 |
| 2 | 2.5 | 25 | 11644 1690 | 1400 | 9.0 | |
| | 2.5 | 35 | 13160 1910 | 1700 | 13.4 | |
| | 2.5 | 45 | 14951 2170 | 1960 | 16.6 | |
| | 2.5 | 55 | 16329 2370 | 2230 | 20.1 | |
| | 2.5 | 65 | 17570 2550 | 2420 | 24.0 | |
| | 2.5 | 80 | 19568 2840 | 2810 | - | |

TABLE II

| Example | Wt. % Nylon | RPM | Pressure, kPa (PSI) | Torque, M-g | Output, g/Min. | Shear Rate Sec⁻¹ |
|---|---|---|---|---|---|---|
| Control B | 0 | 30 | 19637 2850 | 3530 | 10.7 | 86 |
| | 0 | 50 | 23908 3470 | 4340 | 18.2 | 130 |
| | 0 | 80 | 26871 3900 | 5000 | 29.1 | 210 |
| 3 | 1 | 30 | 19085 2770 | 2730 | 10.8 | 80 |
| | 1 | 50 | 22392 3250 | 3120 | 17.9 | 130 |
| | 1 | 80 | 25631 3720 | 3630 | 29.9 | 210 |
| | 1 | 100 | 27008 3920 | 4050 | 37.1 | 270 |
| | 1 | 120 | 28731 4170 | 4430 | 45.3 | 325 |

EXAMPLE 4

LLDPE films in this invention block together after blown film fabrication but the films comprising 1% Nylon 6 are separated. This improvement of desirable antiblocking property of LLDPE films with a small amount of nylon is illustrated in Table III.

TABLE III

| MATERIAL | BLOCKING FORCE, G |
|---|---|
| Exxon 3001 | 41.6 |
| Exxon 3001 + 1% Nylon 6 | 4.1 |
| NKX-018 | 76.8 |
| NKX-018 + 1% Nylon 6 | 3.9 |

Exxon 3001 is an ethylene-hexene LLDPE having a density of 0.918 and a MI of 1.
The Mobil 0.5 MI LLDPE used in Examples 1-3 and for Control B is an ethylene-hexene copolymer having a MI of 0.5.
NKX-018 is a Mobil LLDPE of ethylene-hexene copolymer having a density of 0.919 and a MI of 1.

EXAMPLE 5

Processability and extrudate appearance tests of LLDPE (Mobil NTA-101, a copolymer of ethylene and hexene having a melt index (MI) of 2 and a density of 0.918), blended with low amounts of polyamide (nylon 6) were conducted using a 1.9cm (3/4 inch) Brabender extruder having a capillary die with a diameter of 1.5mm (60 mils). The extrudates were fabricated through the die continuously for 1 hour except where otherwise indicated. The results, set out in Table IV show that addition of even less than 1 wt% polyamide significantly reduces extruder torque and enhances extrudate appearance.

EXAMPLE 6

Processability and film appearance tests of LLDPE (Mobil NTA-101) blended with low amounts of polyamide (Nylon 6) were conducted using a 6.4cm (2.5 inch) Sterling extruder having a 15.2cm (6 inch) die

4

with a diameter of 0.9mm (35 mils). The film appearance was then examined. The thin films were fabricated through the die continuously for 1 hour except where otherwise indicated. The results, set out in Table V show that addition of even less than 1 wt% polyamide significantly reduces extruder torque and enhances film appearance.

TABLE IV

| EFFECT OF NYLON 6 ON PROCESSABILITY AND FILM APPEARANCE OF LLDPE (NTA-101) | | | | |
|---|---|---|---|---|
| Wt.% Nylon 6 | Output Rate g/min | Shear Rate sec -1 | Torque MG | Extrudate Appearance |
| 0 | 24 | 190 | 4000 | Severe M.F. |
| .5 wt% | 24 | 190 | 3400 (-15%) | M.F.F. |
| .1 wt% | 24 | 190 | 3500 (-12.5%) | M.F.F. |

M.F. = Melt Fracture

M.F.F. = Melt Fracture Free

(a) = Continuously run for 2 hours

*Using 1.9cm (3/4") Brabender with capillary die (diameter = 1.5 mm (60 mils))

TABLE V

| EFFECT OF NYLON 6 ON PROCESSABILITY AND FILM APPEARANCE OF LLDPE (NTA-101) | | | | | | | |
|---|---|---|---|---|---|---|---|
| Wt.% Nylon 6 | Output Rate kg/hr-cm (lb/hr-in)die) | Shear Rate sec -1 | kPa | Pressure psi | Motor Current amp | Tm °C (°F) | Film Appearance |
| 0 | 5.2 (6.0) | 300 | 27560 | 4000 | 42 | 228 (442) | Severe M.F. |
| .5 | (a) 5.3 (6.1) | 305 | 24115 | 3500 (-12.5%) | 38 (-9.5%) | 224 (435) | M.F.F. |
| .1 | (b) 5.1 (5.9) | 298 | 24115 | 3500 (-12.5%) | 38 (-9.5%) | 225 (437) | M.F.F. |
| .5 | (a) 4.9 (5.7) | 280 | 24460 | 3550 (-11%) | 38 (-9.5%) | 224 (436) | M.F.F. |
| .2 | (c) 5.2 (6.0) | 300 | 24460 | 3550 (-11%) | 39 (-7.2%) | 226 (438) | M.F.F. |

M.F. = Melt Fracture

M.F.F. = Melt Fracture Free

(a) = Continuously run for 1 hour

(b) = Continuously run for 2 1/2 hours

(c) = Continuously run for 3 hours

## Claims

1. A composition which comprises a blend of a linear polymer of ethylene and up to 3 weight percent of a thermoplastic polyamide polymer.

2. A composition according to claim 1 wherein the linear polymer is a copolymer of ethylene and a higher olefin.

3. A composition according to claim 2 wherein the higher olefin is hexene.

4. A composition according to any preceding claim wherein the blend comprises 0.01 to 3 weight percent of the polyamide polymer.

5. A composition according to claim 4 wherein the blend comprises 0.1 to less than 1 weight percent of the polyamide polymer.

6. A composition according to any preceding claim wherein the linear ethylene polymer is LLDPE having a density of less than 0.93.

7. A composition according to any preceding claim in the form of a film.

8. A method of extruding a linear polymer of ethylene, which method comprises adding to the linear polymer of ethylene a thermoplastic polyamide polymer in an amount of less than 3 weight percent.

9. A method according to claim 8 wherein the amount of thermoplastic amide polymer is 0.1 to less than 1 weight percent and the linear polymer is LLDPE having a density of 0.93 or less.